# EUROPEAN PATENT SPECIFICATION

(11) **EP 3 314 218 B1**
(45) Date of publication and mention of the grant of the patent: **13.09.2023**
(21) Application number: 16818582.5
(22) Date of filing: 28.06.2016
(51) Int. Cl.: A47K 5/122, A47K 5/13, B65D 35/40, B65D 35/50, B65D 47/28, G01F 11/04, G01F 11/28, G01F 11/26, B05B 11/04, B65D 47/08, G01F 11/08, G01F 11/16, B05B 11/00, B05B 1/28

(54) **MEASURED DOSE DISPENSERS AND METHODS OF USING THE SAME**
SPENDER FÜR ABGEMESSENE DOSEN UND VERFAHREN ZUR VERWENDUNG DAVON
DISTRIBUTEURS DE DOSE MESURÉE ET LEURS PROCÉDÉS D'UTILISATION

(30) Priority: 29.06.2015 US 201514754252; 13.05.2016 WO PCT/US2016/032388
(43) Date of publication of application: 02.05.2018
(73) Proprietor: Silgan Dispensing Systems Slatersville LLC, Slatersville, RI 0276 (US)
(72) Inventor: SKILLIN, Clifford, Blackstone, MA 01504 (US); BRANNON, Patrick, J., Warwick, RI 02888 (US)
(74) Representative: Coulson, Elizabeth Eve
(86) International application number: PCT/US2016/039760
(87) International publication number: WO 2017/004011

(56) References cited:
- WO-A1-2012/171708
- WO-A1-2015/159078
- US-A- 4 811 871
- US-A1- 2013 270 301
- US-A1- 2014 231 462

## Description

### BACKGROUND OF THE INVENTION

(1) Field of the Invention: The instant invention relates to dispensing closures for containers for flowable products such as personal care products, concentrated beverages, food products, home and garden chemical products, healthcare products, etc. More specifically, the invention relates to a dispensing closure having an interior measuring reservoir which is automatically filled with a measured dose of the flowable product when the container is inverted, and dispenses the measured dose of product from the measuring reservoir when the container is squeezed.

(2) Description of Related Art: Dispensing containers are used in a variety of industries for dispensing various liquid or flowable products. As integrated dispensing closures become more prevalent in all industries consumer desire presses for their use on an ever expanding array of products and packages, while product manufacturers search for unique solutions at the lowest possible cost to promote sales and maintain profit margins.

WO 2015/159078 discloses a dosing dispensing closure for dispensing fluid compositions, the dispensing closure having three cooperating parts or elements, a body cap (20), a piston assembly (80) and a control cap (40) which when properly configured and assembled are each moveable with respect to one or more of the other parts or elements. By establishing an appropriate engagement of these parts, a user of the dosing dispensing closure may adjust the operating characteristics and hence the amount of a fluid composition dose delivered from the dosing dispensing closure without requiring disassembly of these parts or elements.

### SUMMARY OF THE INVENTION

A first aspect of the invention provides a dispensing closure for dispensing a flowable product from a squeeze-type product container comprising: a cup-shaped measuring reservoir having a bottom wall, a side wall with an upper peripheral edge, and a plurality of flow ports adjacent the upper peripheral edge said cup-shaped measuring reservoir having a structure configured to attach said measuring reservoir to said product container and said measuring reservoir for filling with a measured dose of flowable product through said flow ports when inverted; a dispensing cap having an upper deck, an exit orifice, a flow conduit in communication with the exit orifice, and an inner skirt wall having an outer surface in sliding engagement with an inner surface of the side wall of the measuring reservoir whereby said measuring reservoir and said dispensing cap cooperate to define an adjustable reservoir volume;, the dispensing cap being movable relative to the measuring reservoir between a minimum volume dispense position and a maximum volume dispense position, a cup-shaped piston valve having a bottom wall and a valve stem extending within the cup-shaped piston valve and extending upwardly from the bottom wall in a direction toward the flow conduit; said piston valve being slidably movable within the measuring reservoir between: an open position wherein said valve stem is spaced from a valve seat formed at said entrance orifice of said flow conduit whereby flowable product can enter said measuring reservoir through said flow ports and exit through said flow conduit; and a closed position wherein said valve stem is in mating engagement with said valve seat closing said flow conduit, and wherein said piston valve is movable from said open position to said closed position to dispense said measured dose of product responsive to pressure within said container induced by squeezing said container; a coil spring encircling the flow conduit and the valve stem and captured between a lower surface of the upper deck of the dispensing cap and the bottom wall of the piston valve, the spring normally biasing the piston valve to an open position; and a plurality of pressure apertures in a bottom wall of the measuring reservoir.

Optionally, the structure configured to attach the measuring reservoir to the product container comprises a reservoir skirt extending outwardly and downwardly from the upper peripheral edge, the reservoir skirt having an inner surface configured to attach to a neck of the product container.

Optionally, the inner surface of the reservoir skirt includes an inward thread.

Optionally, the dispensing cap further includes an outer skirt depending downwardly from the upper deck, the outer skirt having an inward thread that engages with an outward thread on the reservoir skirt whereby the dispensing cap is rotatably movable relative to the measuring reservoir to move the dispensing cap between the minimum volume dispense position and the maximum volume dispense position.

Optionally, the minimum volume dispense position is defined when the upper deck engages the upper peripheral edge of the measuring reservoir; and wherein the maximum volume dispense position is defined when the upper deck is moved axially away from the upper edge of the measuring reservoir.

Optionally, the measuring reservoir includes a guide stem extending upwardly from the bottom wall thereof, and the valve stem of the piston valve comprises an annular valve stem received in sliding mated relation with the guide stem.

Optionally, the guide stem is cylindrical.

Optionally, the flow conduit depends downwardly from the upper deck to provide a flow path from an entrance orifice at a lower end thereof to the exit orifice.

Optionally, the inner skirt wall depends downward from the upper deck.

### BRIEF DESCRIPTION OF THE DRAWINGS

While the specification concludes with claims particularly pointing out and distinctly claiming particular embodiments of the instant invention, various embodiments of the invention can be more readily understood and appreciated from the following descriptions of various embodiments of the invention when read in conjunction with the accompanying drawings in which:
Fig. 1 is a perspective view of an exemplary embodiment of the dispensing closure mounted on a squeeze-type product container that does not form part of the claimed invention;
Fig. 2 is a top perspective view of the dispensing closure that does not form part of the claimed invention;
Fig. 3 bottom perspective view thereof that does not form part of the claimed invention;
Fig. 4 is another perspective view thereof with the closure lid open that does not form part of the claimed invention;
Fig. 5 is an exploded perspective view showing the components of the exemplary dispensing closure that does not form part of the claimed invention;
Fig. 6 is a cross-sectional view thereof taken along line 6-6 of Fig. 2 that does not form part of the claimed invention;
Fig. 7 is a cross-section view showing the dispensing closure inverted and the piston valve an at-rest open position that does not form part of the claimed invention;
Fig. 8 is another view thereof with the container being squeezed to dispense the product that does not form part of the claimed invention;
Fig. 9 is still another view thereof with the piston valve fully closed at the end of the dispensing stroke that does not form part of the claimed invention;
Fig. 10 is yet another view thereof of the piston valve being returned to the open position after releasing pressure on the container that does not form part of the claimed invention;
Fig. 11 is a perspective view of an exemplary embodiment of the claimed invention showing a dispensing closure with an adjustable measuring reservoir;
Fig. 12 is an exploded perspective view thereof;
Fig. 13 is a cross-section view thereof taken along line 13-13 of Fig. 12;
Fig. 14 is a cross-sectional view showing the dispensing closure inverted, the outer adjustment cap rotated to a minimum dispense position, and the piston valve at an at-rest position;
Fig. 15 is another view thereof with the container being squeezed and the piston valve fully closed at the end of the dispensing stroke;
Fig. 16 is a cross-sectional view showing the dispensing closure inverted, the outer adjustment cap rotated to a maximum dispense position, and the piston valve at an at-rest position; and
Fig. 17 is another view thereof with the container being squeezed and the piston valve fully closed at the end of the dispensing stroke.

### DETAILED DESCRIPTION OF THE INVENTION

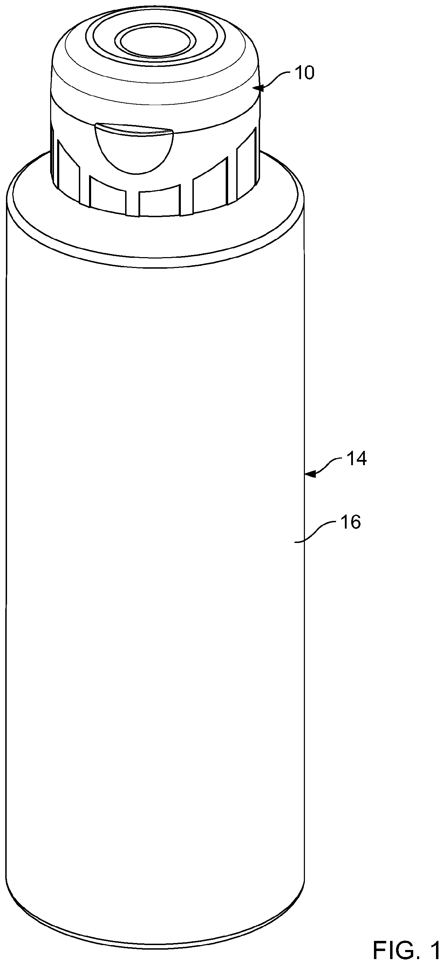

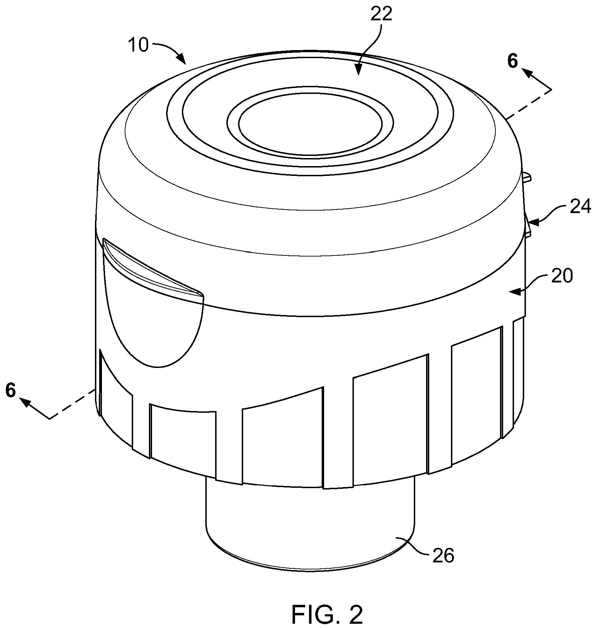

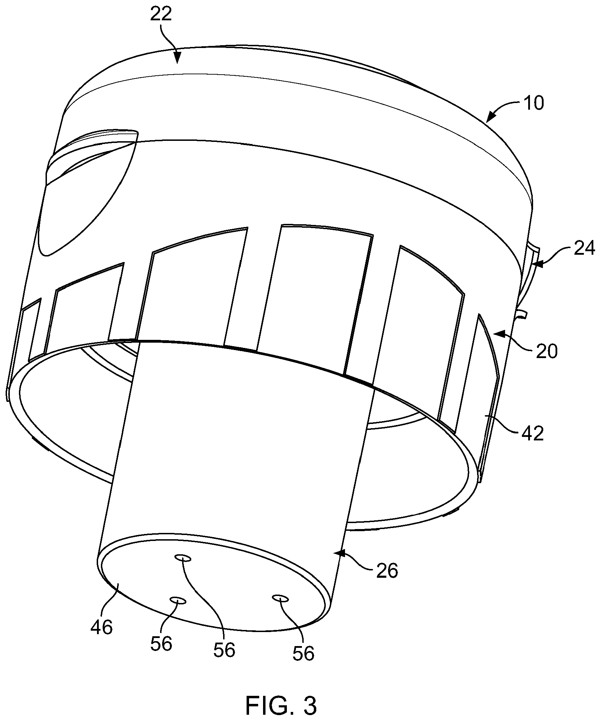

Referring now to the drawings, an exemplary embodiment of the invention is generally indicated at 10 in Figs. 1-10. This illustrated example does not form part of the claimed invention.

The instant invention is directed to a dispensing closure 10 for dispensing a measured dose of a flowable product 12 from a squeeze-type product container 14.

Generally, the product container 14 is molded from a flexible plastic and has a main body portion 16 which is sufficiently pliable such that the user may readily squeeze the container 14 to apply pressure to the flowable product 12 contained therein. Preferably, the container 14 also may include a threaded neck 18.

The dispensing closure 10 comprises a closure body 20, a closure lid 22 connected to the closure body 20 by a living hinge 24, a measuring reservoir 26, a piston valve 28 movable within the measuring reservoir 26, and a spring 30 for biasing the piston valve 28 to a normally open position. The dispensing closure 10, closure lid 22, measuring reservoir 26 and piston valve 28 are preferably molded from plastic, while the spring 30 is preferably stainless steel. Other materials as suitable for the flowable product are also contemplated.

The closure body 20 has an upper deck 32, a centrally located exit orifice 34, and a flow conduit 36 in fluid communication with the exit orifice 34. The flow conduit 36 depends downwardly from the upper deck 32 to provide a flow path from an entrance orifice 38 at a lower end thereof upwardly to the exit orifice 34. The closure body 20 further includes an inner mounting skirt 40 depending downwardly from the upper deck 32 and an outer decorative skirt 42 shaped to blend with the outside shape of the product container 14. The inner skirt 40 includes threads for engagement with the threaded neck 18 of the product container 14.

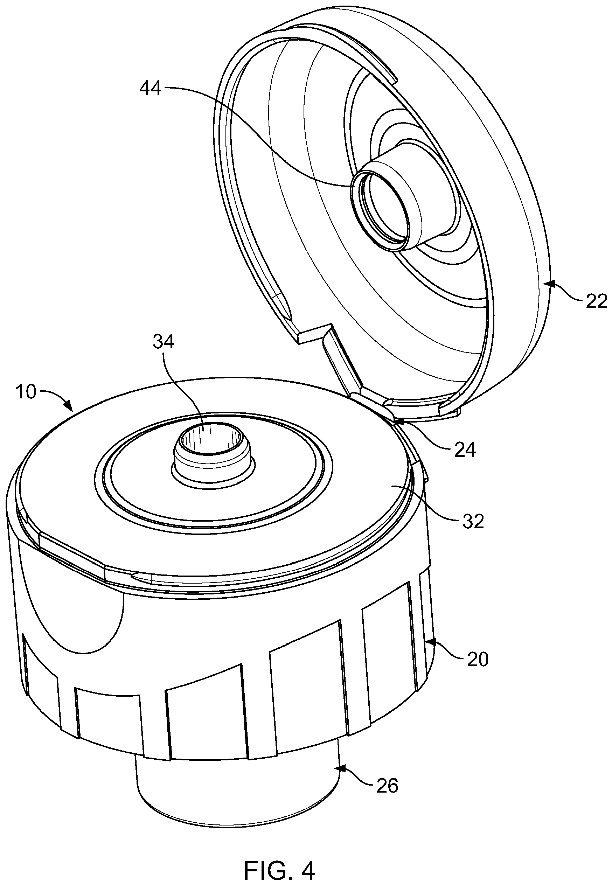

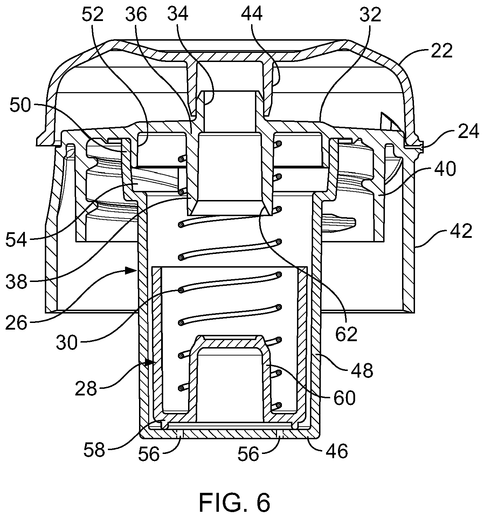

The closure lid 22 is movable between a closed position (Figs. 1-3) and an open position (Figs. 4 and 6). The lid 22 includes a sealing structure 44 on the underside of the top wall which is received in interfitting engagement with the exit orifice 34 to selectively prevent flowable product from exiting the exit orifice 34 when the lid 22 is closed (See Fig. 6).

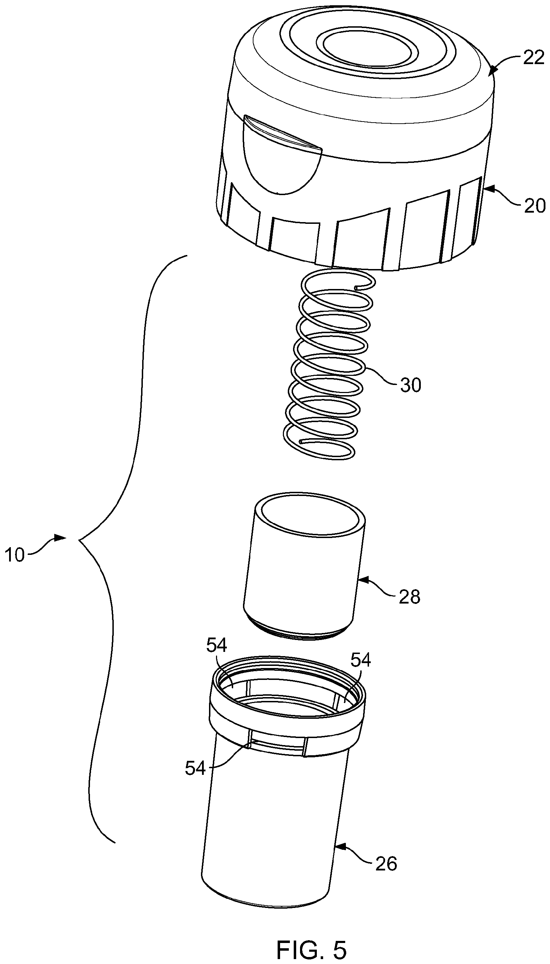

Referring to Figs. 5 and 6, the cup-shaped measuring reservoir 26 has a bottom wall 46, a cylindrical sidewall 48 extending up from the bottom wall 46, and an upper peripheral edge 50 received in snap-fitting engagement with a concentric, annular mounting rim 52 on a lower surface of the upper deck 32. The mounting rim 52 encircles the flow conduit 36 such that the measuring reservoir 26 encircles and surrounds the flow conduit 36. The measuring reservoir 26 has a plurality of flow ports 54 (best seen in Fig. 5) adjacent to the upper peripheral edge to allow the flowable product into and out of the measuring reservoir 26. In use, the measuring reservoir 26 fills with a measured (fixed volume) dose of flowable product through the flow ports 54 when the container 14 is inverted. The bottom wall 46 also includes a plurality of pressure apertures 56 through which product moves during dispensing and refilling.

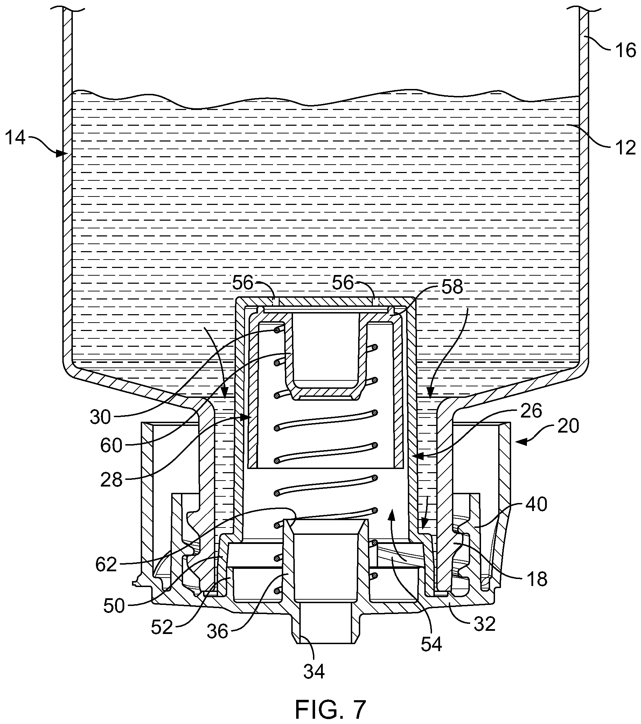

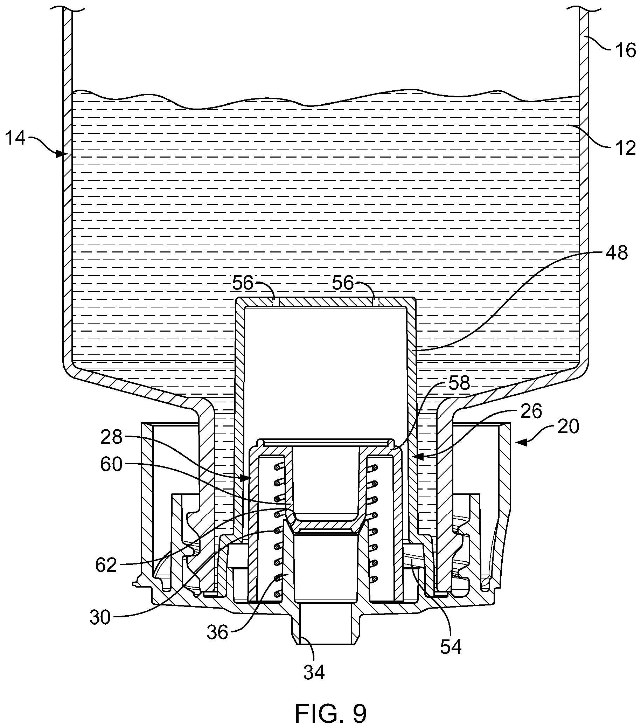

Referring to Figs. 5-10, the cup-shaped piston valve 28 has a bottom wall and a valve stem 60 extending upwardly from the bottom wall 58, the piston valve 28 being slidably movable within the measuring reservoir 26 between an open position (Figs. 6-7) and a closed position (Fig. 9). The closure lid 22 is omitted from Figs. 7-10 for clarity. In the open position (Fig. 7), the valve stem 60 is spaced from a valve seat 62 formed at an entrance orifice 38 of the flow conduit 36 whereby flowable product 12 can enter the measuring reservoir 26 through the flow ports 54 and exit through the flow conduit 36 (see arrows). In the closed position (Fig. 9), the valve stem 60 is in mating engagement with the valve seat 62 and the upper peripheral edge of the piston cup wall engages the lower surface of the upper deck 32 closing the flow conduit 36 and preventing the flowable product 12 from exiting the exit orifice 34.

The coil spring 30 resides within the measuring reservoir 26 where it encircles the flow conduit 36 and the valve stem 60 and is captured between the lower surface of the upper deck 32 and the bottom wall 58 of the piston valve 28. The spring 30 normally biases the piston valve 28 to its open resting position (Fig. 7).

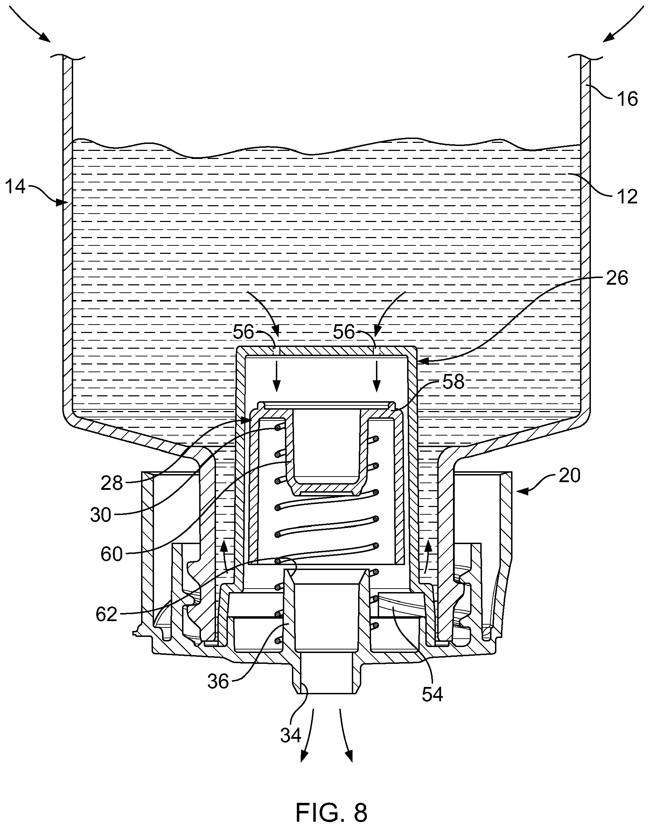

In operation, the piston valve 28 begins its cycle in the open at rest position (Fig. 6). To fill the measuring reservoir 26 with a measured dose of flowable product 12, the container 14 is inverted (Fig. 7) where the flowable product 12 enters and fills the measuring reservoir 26 through the flow ports 54 adjacent the lower surface of the upper deck 32. The product 12 within the measuring reservoir 26 is now ready for dispensing. Dispensing of the measured dose is accomplished by squeezing the container 14 to produce pressure within the container 14 (Fig. 8). Continuous pressure within the container 14 forces flowable product 12 through the pressure apertures 56 into the measuring reservoir 26 beneath the bottom wall 58 of the piston valve 28, and forces the piston valve 28 to move from the open position (Fig. 7) towards the closed position (Fig. 8), and in doing so, to dispense the measured dose of product 12 through the flow conduit 36 and out the exit orifice 34. When the piston valve 28 reaches the closed position (Fig. 9), the valve stem 60 engages the valve seat 62 on the bottom end of the flow conduit 36 and the upper peripheral edge of the cup wall engages the lower surface of the upper deck 32 to fully close the flow conduit 36 and complete the dispensing cycle.

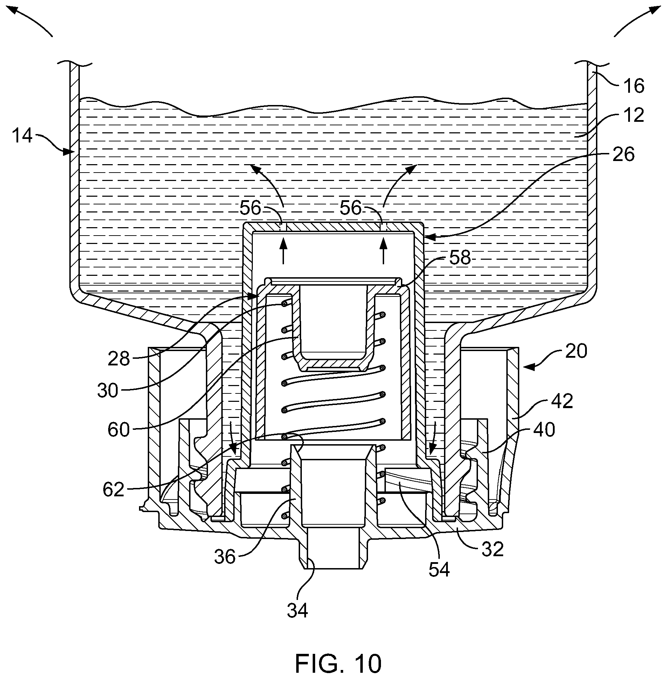

The release of pressure from the container 14 (Fig. 10) allows the coil spring 30 to expand and force the piston valve 28 back towards the normal at rest position. Flowable product 12 again enters the measuring reservoir 26 through the flow ports 54 while flowable product 12 is also returned to the container 14 through the pressure apertures 56. The reverse motion of the piston valve 28 creates a "suck-back" effect at the exit orifice 34 preventing any product 12 from dripping from the exit orifice 34 after the squeezing pressure is released. Once uprighted, a small amount of product 12 will normally remain within the piston valve 28.

The amount of the measured dose and the speed of dispensing and refilling can be easily adjusted by one skilled in the art by varying the size of the measuring reservoir 26, the size of the piston valve 28, the size of the flow ports 54 and the size of the pressure apertures 56.

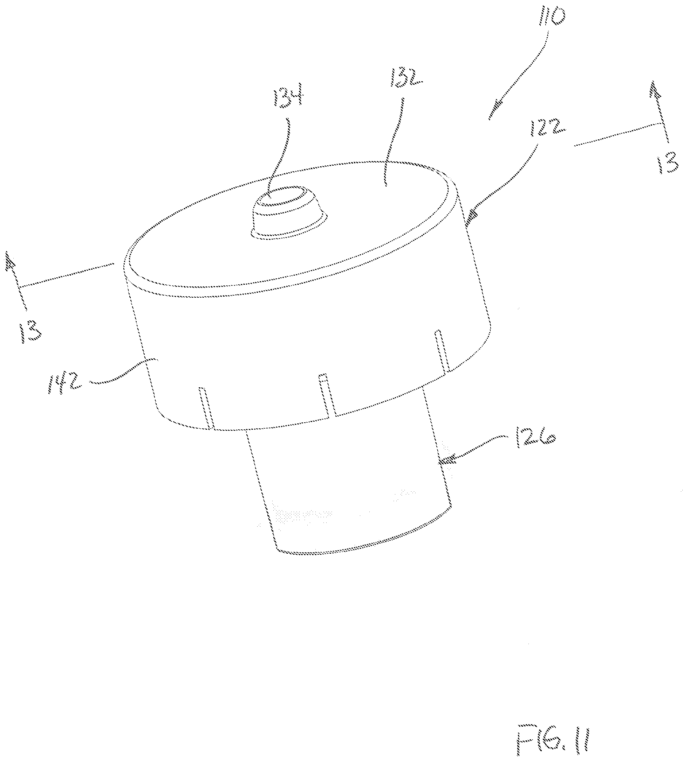

A exemplary embodiment 110 of the claimed invention is illustrated in Figs. 11-17 and provides an adjustable size measuring reservoir which allows the user to dispense an adjustable dose of product. This adjustable embodiment of the claimed invention comprises a measuring reservoir 126, a dispensing cap 122 mounted on the measuring reservoir 126, a piston valve 128 movable within the measuring reservoir 126 and a spring 130 for biasing the piston valve 128. In general terms, the adjustable measured dose is provided by mounting the measuring reservoir 126 on the container 14 and allowing the dispensing cap 122 to slidably move relative to the measuring reservoir 126 to change the volume of the measuring reservoir.

The measuring reservoir 126 has a bottom wall 146, a cylindrical side wall 148 with an upper peripheral edge 150, and a reservoir skirt 140 extending outward and downwardly from the peripheral edge. The reservoir skirt 140 has inward threads 141 for engagement with an outward threaded neck 18 of a product container 14.

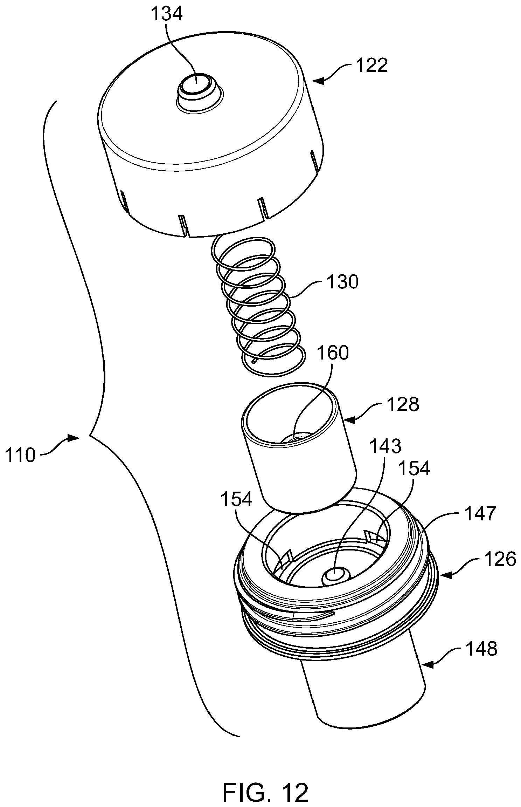

The measuring reservoir 126 has a plurality of flow ports 154 adjacent the upper edge 150 to allow the flowable product 12 into the measuring reservoir 126 when inverted (See Fig. 12). The bottom wall 146 includes a plurality of pressure apertures 156 through which product 12 moves during dispensing and filling or refilling.

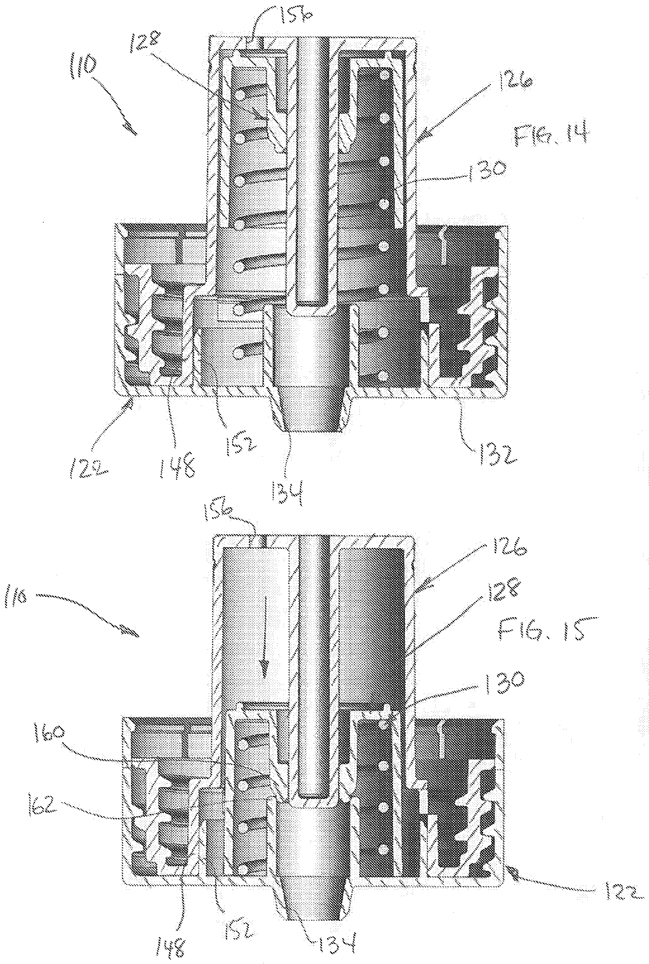

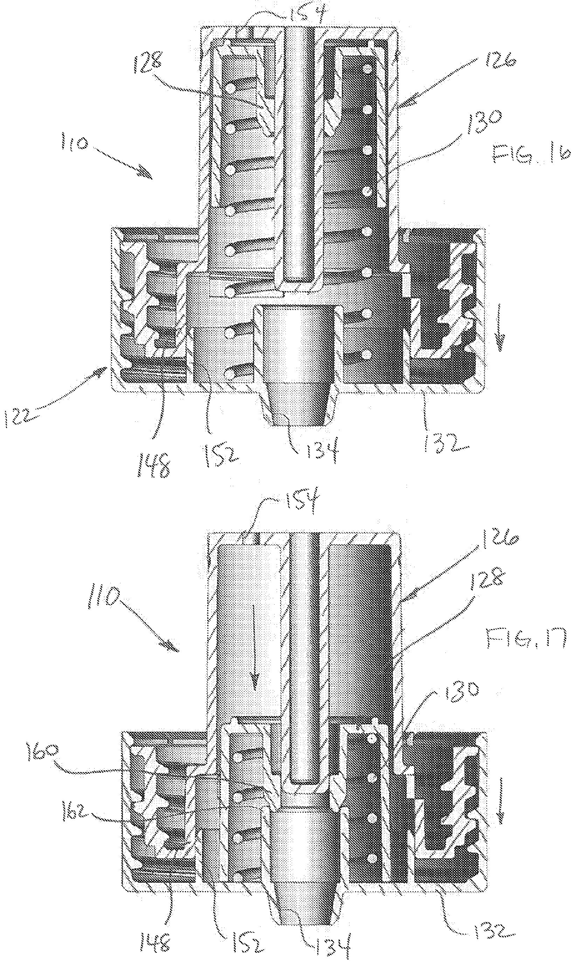

The dispensing cap 122 has an upper deck 132, a centrally located exit orifice 134 and a flow conduit 136 in communication with the exit orifice 134 which depends downwardly from the upper deck 132 to provide a flow path from an entrance orifice 138 at a lower end thereof to the exit orifice 134. The cap 122 further includes an inner skirt wall 152 depending downward from the upper deck 132 wherein an outer surface of the inner skirt wall 152 is received in sliding engagement with an inner surface of the upper portion of the side wall 148 of the measuring reservoir 126. The sliding engagement between these walls 148/152 allows the measuring reservoir 126 and the dispensing cap 122 to axially slide relative to each other and cooperate to define an adjustable reservoir volume (See Figs. 14-17). In operation, a minimum volume dispense position (Figs. 14-15) is defined when the upper deck 132 engages the upper peripheral edge 150 of the measuring reservoir 126 and a maximum volume dispense position (Figs. 16-17) is defined when the upper deck 132 is moved axially away from the upper edge 150 of the measuring reservoir 126. In order to create this movement, the dispensing cap 122 further includes an outer skirt 142 depending downwardly from upper deck 132 where the outer skirt 142 has an inward thread 145 that engages with an outward thread 147 on the reservoir skirt 140. In this regard, the dispensing cap 122 is rotatably movable relative to the measuring reservoir 126 to linearly translate the dispensing cap 122 between the minimum volume dispense position (Figs. 14-15) and the maximum volume dispense position (Figs. 16-17). It should be noted that the dispensing cap 122 can also be rotatably positioned at a plurality of intermediate volume positions (not shown) between the minimum and and maximum positions to further provide a variety of different dispensing volumes.

It is further contemplated that the dispensing cap 122 and the measuring reservoir 126 could include alternate structure(s) which would allow them to move between these minimum and maximum volume positions or other intermediate positions. For example, the walls 148/152 could be formed with a push-pull snap bead arrangement where the dispensing cap 122 was simply pulled outward to the maximum dispense position and pushed back inwardly to the minimum dispense position. In this regard, the outer skirt would not be required and the outer thread on the reservoir skirt would also not be required. The adjustment concept should not be limited by the exemplary embodiments.

The cup-shaped piston valve 128 has a bottom wall 158 and a valve stem 160 extending upwardly from the bottom wall 158. The valve stem 160 is slidably received on the guide stem 143 wherein the piston valve 128 is slidably movable within the measuring reservoir 126 between an open position (Figs. 14 and 16) and a closed position (Figs. 15 and 17). In the open position (Figs. 14 and 16), the valve stem 160 is spaced from a valve seat 162 formed at the 138 entrance orifice of the flow conduit 136 whereby flowable product 12 can enter the measuring reservoir 126 through the flow ports 154 and exit through the flow conduit 136 and exit orifice 134. In the closed position (Figs. 15 and 17), the valve stem 160 is in mating engagement with the valve seat 162 closing the flow conduit 136 and preventing the flowable product 12 from exiting the exit orifice 134.

Optionally, in order to further guide linear movement of the piston valve 128, the second exemplary embodiment 110 includes a cylindrical, axially located guide stem 143 extending upwardly from the bottom wall 146 of the measuring reservoir 126 and the valve stem 160 of the piston valve 128 is formed with an annular shape. In this regard, the annular valve stem 160 may be concentrically received on the guide stem. The guide stem 143 and annular valve stem 160 are not required, and the second exemplary embodiment is also fully functional with the valve structure 28 as illustrated in the first exemplary embodiment.

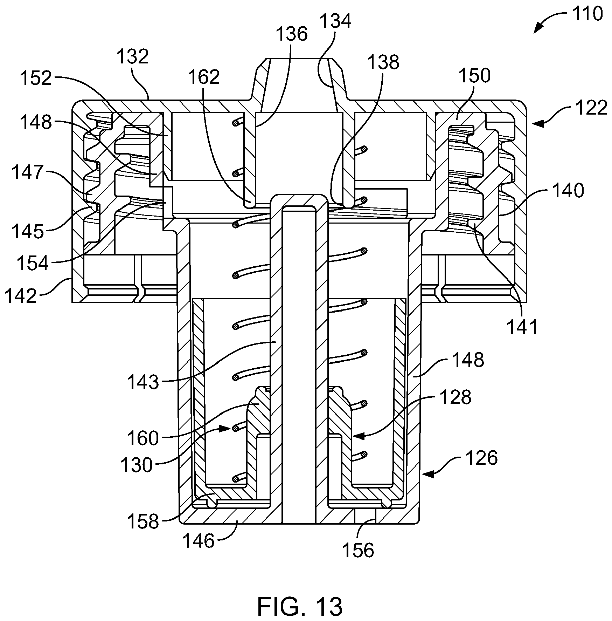

The coil spring 130 resides within the measuring reservoir 126 where it encircles the flow conduit 136 and the valve stem 160 and is captured between the lower surface of the upper deck 132 of the dispensing cap 122 and the bottom wall 158 of the piston valve 128. The spring 130 normally biases the piston valve 128 to its open resting position (Figs. 13, 14 and 16). The piston valve 128 is movable from its normal open position to the closed position (Figs. 15 and 17) to dispense the measured dose of product 12 responsive to pressure within the container 14 induced by squeezing the container 14.

Dispensing and valve operation is otherwise the same as in the fixed dose embodiment 10.

It can therefore be seen that the exemplary embodiments provide dispensing closures 10 and 110 which are uniquely effective for automatically dispensing a measured dose, or an adjustable measured dose, of flowable product 12 from a squeeze-type container 14.

While there is shown and described herein certain specific structures embodying various embodiments of the invention, it will be manifest to those skilled in the art that various modifications and rearrangements of the parts may be made without departing from the scope of the underlying inventive concept and that the same is not limited to the particular forms herein shown and described except insofar as indicated by the scope of the appended claims.

## Claims

1. A dispensing closure (110) for dispensing a flowable product (12) from a squeeze-type product container (14) comprising:
a cup-shaped measuring reservoir (126) having a bottom wall (146), a side wall (148) with an upper peripheral edge (150), and a plurality of flow ports (154) adjacent said upper peripheral edge, said cup-shaped measuring reservoir (126) having a structure configured to attach said measuring reservoir (126) to said product container (14) and said measuring reservoir (126) for filling with a measured dose of flowable product through said flow ports (154) when inverted;
a dispensing cap (122) having an upper deck (132), an exit orifice (134), a flow conduit (136) in communication with said exit orifice, and an inner skirt wall (152) having an outer surface in sliding engagement with an inner surface of said side wall (148) of said measuring reservoir, whereby said measuring reservoir (126) and said dispensing cap cooperate to define an adjustable reservoir volume;
said dispensing cap (122) being movable relative to said measuring reservoir (126) between a minimum volume dispense position and a maximum volume dispense position,
a cup-shaped piston valve (128) having a bottom wall (158) and a valve stem (160) extending within the cup-shaped piston valve (128) and extending upwardly from said bottom wall (158) in a direction toward said flow conduit (136), said piston valve (128) being slidably movable within the measuring reservoir (126) between: an open position wherein said valve stem (160) is spaced from a valve seat formed at said entrance orifice of said flow conduit (136) whereby flowable product can enter said measuring reservoir (126) through said flow ports and exit through said flow conduit (136); and a closed position wherein said valve stem (160) is in mating engagement with said valve seat closing said flow conduit (136),
and wherein said piston valve (128) is movable from said open position to said closed position to dispense said measured dose of product responsive to pressure within said container induced by squeezing said container;
a coil spring (130) encircling said flow conduit (136) and said valve stem (160) and captured between a lower surface of said upper deck (132) of said dispensing cap (122) and said bottom wall (158) of said piston valve (128), said spring (130) normally biasing the piston valve to an open position; and
a plurality of pressure apertures (156) in a bottom wall of said measuring reservoir (126), wherein flowable product moves through said pressure apertures when said piston valve is moving between said open and closed positions.

2. The dispensing closure of claim 1 wherein said structure configured to attach said measuring reservoir (126) to said product container (14) comprises a reservoir skirt (140) extending outward and downwardly from said upper peripheral edge (150), said reservoir skirt (140) having an inner surface configured to attach to a neck of said product container (14).

3. The dispensing closure of claim 2 wherein said inner surface of said reservoir skirt includes an inward thread (141).

4. The dispensing closure of claim 3 wherein said dispensing cap further includes an outer skirt (142) depending downwardly from said upper deck (132), said outer skirt having an inward thread (145) that engages with an outward thread (147) on said reservoir skirt (140) whereby said dispensing cap is rotatably movable relative to said measuring reservoir (126) to move said dispensing cap between said minimum volume dispense position and said maximum volume dispense position.

5. The dispensing closure of claim 4 wherein said minimum volume dispense position is defined when the upper deck (132) engages the upper peripheral edge (150) of the measuring reservoir (126); and wherein said maximum volume dispense position is defined when the upper deck (132) is moved axially away from the upper edge (150) of the measuring reservoir (126).

6. The dispensing closure of any preceding claim wherein said measuring reservoir (126) includes a guide stem (143) extending upwardly from said bottom wall (146) thereof, and said valve stem (160) of said piston valve (128) comprises an annular valve stem received in sliding mated relation with said guide stem.

7. The dispensing closure of claim 6 wherein said guide stem (143) is cylindrical.

8. The dispensing closure of claim 1 wherein said flow conduit depends downwardly from said upper deck to provide a flow path from an entrance orifice at a lower end thereof to said exit orifice.

9. The dispensing closure of claim 1 wherein said inner skirt wall depends downward from said upper deck.

## Patentansprüche

1. Spenderverschluss (110) zum Abgeben eines fließfähigen Produkts (12) aus einem zusammendrückbaren Produktbehälter (14), umfassend:
ein becherförmiges Messreservoir (126) mit einer Bodenwand (146), einer Seitenwand (148) mit einem oberen Umfangsrand (150) und einer Vielzahl von Strömungsöffnungen (154) angrenzend an den oberen Umfangsrand, wobei das becherförmige Messreservoir (126) eine Struktur aufweist, die ausgelegt ist, das Messreservoir (126) an dem Produktbehälter (14) zu befestigen, und das Messreservoir (126), wenn umgedreht, zum Einfüllen einer abgemessenen Dosis von fließfähigem Produkt durch die Strömungsöffnungen (154) dient;
eine Spenderkappe (122), die eine Oberseite (132), eine Austrittsöffnung (134), einen Strömungskanal (136) in Verbindung mit der Austrittsöffnung und eine Innenschaftwand (152) mit einer äußeren Oberfläche in gleitendem Eingriff mit einer inneren Oberfläche der Seitenwand (148) des Messreservoirs aufweist, wodurch das Messreservoir (126) und die Spenderkappe zusammenwirken, um ein einstellbares Reservoirvolumen zu definieren;
wobei die Spenderkappe (122) relativ zu dem Messreservoir (126) zwischen einer Abgabeposition für ein minimales Volumen und einer Abgabeposition für ein maximales Volumen beweglich ist,
ein becherförmiges Kolbenventil (128) eine Bodenwand (158) und einen Ventilschaft (160) aufweist, der sich innerhalb des becherförmigen Kolbenventils (128) erstreckt und sich von der Bodenwand (158) in einer Richtung zu dem Strömungskanal (136) nach oben erstreckt, wobei das Kolbenventil (128) gleitfähig innerhalb des Messreservoirs (126) bewegbar ist zwischen: einer offenen Position, wobei der Ventilschaft (160) von einem Ventilsitz beabstandet ist, der an der Eintrittsöffnung des Strömungskanals (136) gebildet ist, wodurch fließfähiges Produkt durch die Strömungsöffnungen in das Messreservoir (126) eintreten und durch den Strömungskanal (136) austreten kann; und einer geschlossenen Position, wobei der Ventilschaft (160) in passendem Eingriff mit dem Ventilsitz ist, wodurch der Strömungskanal (136) verschlossen wird,
und wobei das Kolbenventil (128) von der offenen Position zu der geschlossenen Position bewegbar ist, um die abgemessene Dosis von Produkt in Reaktion auf Druck innerhalb des Behälters, der durch Zusammendrücken des Behälters herbeigeführt wird, abzugeben;
eine Spiralfeder (130), die den Strömungskanal (136) und den Ventilschaft (160) umgibt und zwischen einer unteren Oberfläche der Oberseite (132) der Spenderkappe (122) und der Bodenwand (158) des Kolbenventils (128) aufgenommen ist, wobei die Feder (130) normalerweise das Kolbenventil in eine offene Position vorspannt; und
eine Vielzahl von Drucköffnungen (156) in einer Bodenwand des Messreservoirs (126), wobei sich fließfähiges Produkt durch die Drucköffnungen bewegt, wenn sich das Kolbenventil zwischen der offenen und geschlossenen Position bewegt.

2. Spenderverschluss nach Anspruch 1, wobei die Struktur, die ausgelegt ist, das Messreservoir (126) an dem Produktbehälter (14) zu befestigen, eine Reservoirschürze (140) umfasst, die sich von dem oberen Umfangsrand (150) nach außen und nach unten erstreckt, wobei die Reservoirschürze (140) eine innere Oberfläche aufweist, die ausgelegt ist, an einem Hals des Produktbehälters (14) befestigt zu werden.

3. Spenderverschluss nach Anspruch 2, wobei die innere Oberfläche der Reservoirschürze ein Innengewinde (141) beinhaltet.

4. Spenderverschluss nach Anspruch 3, wobei die Spenderkappe weiter eine Außenschürze (142) beinhaltet, die von der Oberseite (132) nach unten hängt, wobei die Außenschürze ein Innengewinde (145) aufweist, das mit einem Außengewinde (147) an der Reservoirschürze (140) in Eingriff gelangt, wodurch die Spenderkappe relativ zu dem Messreservoir (126) drehbar bewegbar ist, um die Spenderkappe zwischen der Abgabeposition für ein minimales Volumen und der Abgabeposition für ein maximales Volumen zu bewegen.

5. Spenderverschluss nach Anspruch 4, wobei die Abgabeposition für ein minimales Volumen definiert ist, wenn die Oberseite (132) mit dem oberen Umfangsrand (150) des Messreservoirs (126) in Eingriff ist; und wobei die Abgabeposition für ein maximales Volumen definiert ist, wenn die Oberseite (132) axial von dem oberen Rand (150) des Messreservoirs (126) wegbewegt wird.

6. Spenderverschluss nach einem vorstehenden Anspruch, wobei das Messreservoir (126) einen Führungsschaft (143) beinhaltet, der sich von seiner Bodenwand (146) nach oben erstreckt, und der Ventilschaft (160) des Kolbenventils (128) einen ringförmigen Ventilschaft umfasst, der in einem passenden Gleitverhältnis zu dem Führungsschaft aufgenommen ist.

7. Spenderverschluss nach Anspruch 6, wobei der Führungsschaft (143) zylindrisch ist.

8. Spenderverschluss nach Anspruch 1, wobei der Strömungskanal von der Oberseite nach unten hängt, um einen Strömungsweg von einer Eintrittsöffnung an seinem unteren Ende zu der Austrittsöffnung bereitzustellen.

9. Spenderverschluss nach Anspruch 1, wobei die Innenschaftwand von der Oberseite nach unten hängt.

## Revendications

1. Fermeture de distribution (110) pour distribuer un produit fluide (12) à partir d'un récipient de produit (14) de type à presser comprenant :
un réservoir de mesure (126) en forme de coupelle présentant une paroi inférieure (146), une paroi latérale (148) avec un bord périphérique supérieur (150), et une pluralité d'orifices d'écoulement (154) adjacents audit bord périphérique supérieur, ledit réservoir de mesure (126) en forme de coupelle présentant une structure configurée pour fixer ledit réservoir de mesure (126) audit récipient de produit (14) et ledit réservoir de mesure (126) pour le remplissage d'une dose mesurée de produit fluide à travers lesdits orifices d'écoulement (154) lorsqu'il est retourné ;
un capuchon de distribution (122) présentant un plateau supérieur (132), un orifice de sortie (134), un conduit d'écoulement (136) en communication avec ledit orifice de sortie, et une paroi de jupe interne (152) présentant une surface externe en prise par coulissement avec une surface interne de ladite paroi latérale (148) dudit réservoir de mesure, selon lequel ledit réservoir de mesure (126) et ledit capuchon de distribution coopèrent pour définir un volume de réservoir ajustable ;
ledit capuchon de distribution (122) étant mobile par rapport audit réservoir de mesure (126) entre une position de distribution de volume minimum et une position de distribution de volume maximum,
une vanne à piston (128) en forme de coupelle présentant une paroi inférieure (158) et une tige de vanne (160) s'étendant à l'intérieur de la vanne à piston (128) en forme de coupelle et s'étendant vers le haut à partir de ladite paroi inférieure (158) dans une direction vers ledit conduit d'écoulement (136), ladite vanne à piston (128) étant mobile de façon coulissante à l'intérieur du réservoir de mesure (126) entre : une position ouverte dans laquelle ladite tige de vanne (160) est espacée d'un siège de vanne formé au niveau dudit orifice d'entrée dudit conduit d'écoulement (136), selon laquelle un produit fluide peut entrer dans ledit réservoir de mesure (126) à travers lesdits orifices d'écoulement et sortir à travers ledit conduit d'écoulement (136) ; et une position fermée dans laquelle ledit siège de vanne (160) est en prise par accouplement avec ledit siège de vanne fermant ledit conduit d'écoulement (136),
et dans laquelle ladite vanne à piston (128) est mobile de ladite position ouverte à ladite position fermée pour distribuer ladite dose mesurée de produit en réponse à une pression à l'intérieur dudit récipient induite par le serrage dudit récipient ;
un ressort hélicoïdal (130) encerclant ledit conduit d'écoulement (136) et ladite tige de vanne (160) et capturé entre une surface inférieure dudit plateau supérieur (132) dudit capuchon de distribution (122) et ladite paroi inférieure (158) de ladite vanne à piston (128), ledit ressort (130) sollicitant normalement la vanne à piston vers une position ouverte ; et
une pluralité d'ouvertures de pression (156) dans une paroi inférieure dudit réservoir de mesure (126), dans laquelle le produit fluide se déplace à travers lesdites ouvertures de pression quand ladite vanne à piston se déplace entre lesdites positions ouverte et fermée.

2. Fermeture de distribution selon la revendication 1, dans laquelle ladite structure configurée pour fixer ledit réservoir de mesure (126) audit récipient de produit (14) comprend une jupe de réservoir (140) s'étendant vers l'extérieur et vers le bas à partir dudit bord périphérique supérieur (150), ladite jupe de réservoir (140) présentant une surface interne configurée pour se fixer à un col dudit récipient de produit (14).

3. Fermeture de distribution selon la revendication 2, dans laquelle ladite surface interne de ladite jupe de réservoir inclut un filetage intérieur (141).

4. Fermeture de distribution selon la revendication 3, dans laquelle le capuchon de distribution inclut en outre une jupe externe (142) s'étendant vers le bas à partir dudit plateau supérieur (132), ladite jupe externe présentant un filetage intérieur (145) qui se met en prise avec un filetage extérieur (147) sur ladite jupe de réservoir (140), selon laquelle ledit capuchon de distribution est mobile en rotation par rapport audit réservoir de mesure (126) pour déplacer ledit capuchon de distribution entre ladite position de distribution de volume minimum et ladite position de distribution de volume maximum.

5. Fermeture de distribution selon la revendication 4, dans laquelle ladite position de distribution de volume minimum est définie lorsque le plateau supérieur (132) vient au contact du bord périphérique supérieur (150) du réservoir de mesure (126) ; et dans laquelle ladite position de distribution de volume maximum est définie lorsque le plateau supérieur (132) est éloigné axialement par rapport au bord supérieur (150) du réservoir de mesure (126).

6. Fermeture de distribution selon une quelconque revendication précédente, dans laquelle ledit réservoir de mesure (126) inclut une tige de guidage (143) s'étendant vers le haut à partir de ladite paroi inférieure (146) de celui-ci, et ladite tige de vanne (160) de ladite vanne à piston (128) comprend une tige de vanne annulaire reçue en relation d'accouplement coulissant avec ladite tige de guidage.

7. Fermeture de distribution selon la revendication 6, dans laquelle ladite tige de guidage (143) est cylindrique.

8. Fermeture de distribution selon la revendication 1, dans laquelle ledit conduit d'écoulement s'étend vers le bas à partir dudit plateau supérieur pour fournir un trajet d'écoulement à partir d'un orifice d'entrée à une extrémité inférieure de celui-ci jusqu'audit orifice de sortie.

9. Fermeture de distribution selon la revendication 1, dans laquelle ladite paroi de jupe interne s'étend vers le bas à partir dudit plateau supérieur.
